(19) Europäisches Patentamt

European Patent Office

Office européen des brevets

(11) **EP 2 203 494 B1**

(12) **EUROPEAN PATENT SPECIFICATION**

(45) Date of publication and mention
of the grant of the patent:
**28.08.2013 Bulletin 2013/35**

(51) Int Cl.:
***C08G 18/10*** *(2006.01)*     ***C08G 18/62*** *(2006.01)*
***C09D 175/04*** *(2006.01)*

(21) Application number: **08838246.0**

(22) Date of filing: **10.10.2008**

(86) International application number:
**PCT/US2008/079518**

(87) International publication number:
**WO 2009/049158 (16.04.2009 Gazette 2009/16)**

(54) **POLYACRYLIC MOISTURE CURABLE COPOLYMER**

FEUCHTIGKEITSHÄRTBARES POLYACRYLCOPOLYMER

COPOLYMÈRE POLYACRYLIQUE DURCISSABLE À L'HUMIDITÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **11.10.2007 US 979115 P
18.09.2008 US 212913**

(43) Date of publication of application:
**07.07.2010 Bulletin 2010/27**

(73) Proprietor: **Illinois Tool Works Inc.
Glenview, IL 60026 (US)**

(72) Inventors:
• **HARVEY, Ty, Dennis
Glenview
IL 60026 (US)**
• **ZHU, Yuduo
Glenview
IL 60026 (US)**

(74) Representative: **Jones, Helen M.M. et al
Gill Jennings & Every LLP
The Broadgate Tower
20 Primrose Street
London EC2A 2ES (GB)**

(56) References cited:
**EP-A- 0 205 846**     **US-A- 5 508 372**
**US-A1- 2004 197 481**

Remarks:
The file contains technical information submitted after
the application was filed and not included in this
specification

**Description**

FIELD OF THE INVENTION

The present invention in general relates to a polymer curable upon exposure to atmospheric moisture and having elastomeric properties and in particular to such a polymer inclusive of an acrylic component

BACKGROUND OF THE INVENTION

The control of polymer properties is a complex series of material tradeoffs. Invariably when a given polymer is unable to deliver desired characteristics, modifications are made to molecular weight, degree of branching, copolymer blocks, and the like in an attempt to attain the desired properties. Should these efforts fail, a new base monomer is chosen and the process repeated.

Polyurethane polymers are moisture curable and have many advantages such as attractive adhesion and elastomeric properties, recovery, adhesion to concrete, and negligible shrinkage. The disadvantages of a polyurethane system are a short storage life if made to cure faster, the susceptibility to hydrolysis detracts from the weatherability, discoloration, and the often requirement of a primer.

Silicon polymers are moisture curable and have great weatherability and the polymer itself has great torsional rotation giving it great flexibility. Some disadvantages of this system are a short shelf life of maybe six months, and the polymer cannot stick to itself due to low surface energy. This makes reapplication of the polymer difficult

Polysulfide polymers are moisture curable and are characterized by toughness and durability. Some disadvantages of polysulfide polymers are the disagreeable smell and slow curing speed. Silyated polyurethane polymers have been made by grafting a silane onto a polyether polyol that has been terminated by an isocyanate. These "hybrid" polymers display good adhesion to many substrates and good weatherability. A disadvantage is the cost is high.

Acrylic polymers are known for their cost effectiveness, clarity in nonpigmented products, and UV resistance. Acrylics are not known to be moisture curable and most are thermoplastic resins. Some have made an acrylic sealant moisture curable by adding an acrylic polymer terminated by a silane to create a material for back bedding applications of windows, this sealant has limited strength and flexibility and is expensive to produce.

EP 0 205 846 A discloses hydroxy-terminated (meth)acrylate polymers made by free radical polymerisation of (meth)acrylic acid alkyl-ester(s), which can include hydroxyethylmethacrylate, in presence of a regulator e.g. bis(hydroxy:ethyl) di:sulphide. Said polymers are reacted with diisocyanates to give polyurethane prepolymers with predominantly terminal NCO groups which can be cured with latent amine hardeners and are useful in the production of moisture-curable adhesives and sealants.

With the general properties of acrylics being attractive, there exists a need for a class of moisture curable acrylics that cross link to provide a range of properties. There further exists a need for acrylic based elastomers that retain the UV stability, optical transparency, wear and physical properties of traditional thermoplastic acrylics.

SUMMARY OF THE INVENTION

A polyacrylic polymer is provided that is formed by moisture cure of multiple acrylic prepolymer segments as defined in claims 1 and 8. The prepolymer segments each have an average molecular weight of between 3,000 and 600,000 grams per mole. Each of the prepolymers is a homopolymer or copolymer of a monomer from among methyl methacrylate, $C_1$-$C_{16}$, alkyl acrylate, and $C_1$-$C_{16}$ alkyl methyl methacrylate as the predominant monomeric group. The prepolymers are interconnected through moisture cure induced urethane. The polymer is readily cured upon exposure to atmospheric moisture absent inclusion or evolution of a volatile organic compound. The polymer is likewise formed HAP free. Through control of prepolymer properties a variety of thermoset polymer properties are obtained.

A prepolymer is formed including a minority amount of functionalized acrylic monomer that is isocyanate or converted to isocyanate through subsequent reaction. Functionalized acrylic monomers operative herein include a hydroxyl, or an epoxy. Upon application from storage in an anhydrous state, the prepolymer cures upon exposure to atmospheric moisture.

DETAILED DESCRIPTION OF THE PREFERRED EMBODIMENTS

The present invention has utility as a moisture curable polyacrylic composition that is substantially volatile organic compound (VOC) free. An inventive polyacrylic composition is readily adjustable to a variety of properties illustratively including cure rate, glass transition temperature (Tg), linear percent elongation and tensile strength through the choice of monomers, prepolymer chain length, and prepolymer degree of functionality. An inventive composition is also rendered substantially free of hazardous air pollutants (HAP).

As used herein, "substantially VOC free" is defined as satisfying regulatory restrictions to a VOC content of less than 1% total weight percent thereby rendering the inventive composition exempt from VOC control regulations.

As used herein, "substantially HAP free" is defined as satisfying regulatory restrictions to a HAP content of less than 3% total weight percent thereby rendering the inventive composition exempt from HAP control regulations.

According to the present invention, an inventive prepolymer is formed by the copolymerization of a functional moiety containing acrylic monomer and an acrylic monomer lacking the reactive functional moiety (synonymously described herein as being "nonreactive" or "nonfunctionalized"). A reactive moiety containing acrylic monomer according to the present invention includes hydroxy acrylates such as 2-hydroxyethyl acrylate, 2-hydroxyethyl methacrylate, and 3-hydroxypropyl acrylate. epoxy acrylic monomers such as glycidyl methacrylate. Acrylic monomers that are considered nonreactive according to the present invention are those that only include aliphatic moieties combined with acrylate or methacrylate moieties. Nonfunctionalized acrylic monomers according to the present invention illustratively include methylmethacrylate, $C_1$-$C_{16}$ alkyl acrylate, and $C_1$-$C_{16}$ alkyl methacrylate.

According to the present invention, nonfunctionalized acrylic monomer is polymerized through a conventional free radical mechanism and preferably in the presence of a free radical catalyst to form a polyacrylic prepolymer, polymethacrylic prepolymer or copolymer prepolymer of multiple types of nonfunctionalized acrylic monomers. After polymerization has proceeded to a predetermined level typically to yield nonfunctionalized acrylic prepolymer segments having a molecular weight of between 3,000 and 600,000 grams per mole, and preferably between 5,000 and 400,000 , then functionalized acrylic monomer is added and copolymerized to yield an acrylic prepolymer having terminal and/or pendent functional groups extending from the nonfunctionalized acrylic prepolymer backbone. Alternatively, a small percentage of a functionalized acrylic monomer typically between 0.01 and 3 mole percent relative to nonfunctionalized acrylic monomer are premixed and copolymerized by a conventional free radical mechanism and preferably in the presence of a free radical catalyst. The resultant acrylic prepolymer has functional moieties dispersed throughout the prepolymer segments. It is appreciated that regardless of the polymerization scheme, prepolymer molecular weight is readily controlled through the inclusion of a chain transfer agent such as a thiol.

Free radical acrylate polymerization conditions are well known to the art and illustratively include charging of an autoclave with 100 parts by weight of various monomers along with 0.6 parts benzoyl peroxide as a free radical polymerization initiator, 0.5 parts dodecane thiol operative as a chain transfer agent, 70 parts by weight toluene and 30 parts by weight isopropyl alcohol. It is appreciated that by the use of a different chain transfer agent such as mercapto-ethanol not only controls prepolymer molecular weight, but also adds to the prepolymer functionality. Heating under autogenous pressure to 90° Celsius for 4 hours is suitable to induce polymerization. The resultant acrylic prepolymer solution is then optionally charged with functionalized acrylic monomer and further reacted to incorporate functionality into the resultant prepolymer. It is appreciated that polymerization conditions are readily monitored for unreacted monomer to determine polymerization completeness.

Regardless of the specific functional moieties incorporated into an inventive acrylic prepolymer, the prepolymer is rendered moisture curable by subsequent reaction of the functional moieties to isocyanate moieties (-NCO) to yield an inventive polymer with moisture cure induced polyurethane linkages. The prepolymer is readily packaged and moisture cure from a VOC free, HAP free, or VOC and HAP free package upon extrusion and exposure to ambient moisture.

An amine functional moiety may be converted to an isocyanate functional moiety through reaction with phosgene by a conventional process. Preferably, subsequent conversion of amine functionality to isocyanate moieties preferably includes removal of byproduct hydrochloric acid. Likewise, a hydroxyl functional moiety may also readily directly reacted to yield an isocyanate functionality or through an intermediate reaction to an amine which in turn is basis for conversion to an isocyanate group through reaction with phosgene.

A cure mechanism for an inventive acrylic prepolymer is reaction of functional moieties of such a prepolymer with a polyisocyanate. As used herein, a polyisocyanate is defined to include a molecule having at least two isocyanate functionalities. Exemplary diisocyanates include toluene diisocyanate (TDI), naphthalene diisocyanate (NDI), hexamethylene diisocyanate (HDI), and methylenediphenyl diisocyanate. Inclusion of a triisocyanate or higher degree isocyanate is appreciated to be a simple way to add functional isocyanate degree to an inventive prepolymer.

The present invention is readily formed as a one part extrudable prepolymer curable through contact with atmospheric moisture, or alternatively is provided as a two part curable system.

Likewise, epoxy functionality present in an inventive prepolymer is readily reacted through a ring opening to yield a mixed hydroxyl and amine functionality subsequently reacted to yield isocyanate functionality. Epoxide ring opening to yield mixed hydroxyl and amine functionality is detailed in U.S. Patent 2,949,445.

The glass transition temperature of an inventive acrylic prepolymer is readily calculated based on a mole percentage weighted summation of the acrylic monomers from which it is derived as

$$\text{Tg prepolymer} = \sum_{1}^{n} f_n \text{Tg}_n$$

where f is the molar fraction of monomer n and $\text{Tg}_n$ is the glass transition temperature for monomer n, where $\text{Tg}_n$ and Tg prepolymer are in degrees Kelvin. In one embodiment with the majority acrylic monomer being $C_1$-$C_{16}$ alkyl acrylate with a lesser amount of methyl methacrylate and a 2-hydroxyl acrylate in amount of between 0.01 and 3 monomer mole percent functionalized monomer results in an inventive acrylic polymer having particularly attractive sealant properties.

It is appreciated that the properties of an inventive moisture cured acrylic polymer are readily adjusted to suit a particular application. By way of example, molecular weight of prepolymer segments, degree of moisture curable functionality per prepolymer unit, prepolymer viscosity and the identity of the moisture cure bonds formed as being urethane linkages, as well as whether such linkages are terminal to prepolymers or pendent are all properties used to adjust the resultant acrylic polymer properties. As a result of the ability to tailor the resultant acrylic polymer properties, an inventive acrylic polymer composition is suitable for a variety of applications illustratively including sealants, adhesives, and coatings. Subsequent to cure, an inventive polymer has a moisture content typically between 0.005 and 0.1 total weight percent, and preferably between 0.02 and 0.05 total weight percent.

The present invention is further detailed with respect to the following nonlimiting examples. These examples are intended to illustrate specific forms of the present invention and not intended to limit the interpreted scope of the appended claims.

Example 1 - Functionalized Moisture Curable Prepolymer Synthesis

175 grams butyl acrylate (Tg -55° Celsius), 110 grams methyl acrylate (Tg 8° Celsius), 13 grams lauryl methacrylate (Tg -65° Celsius), 3 grams methyl methacrylate (Tg 105° Celsius) and 1 gram hydroxy ethylacrylate (Tg -15° Celsius) are placed in a mixing can with 1.5 grams of dodecane thiol and 0.3 gram of benzoyl peroxide and mechanically mixed for 1 minute. 100 grams of t-butyl acetate is placed in a round bottom flask and brought to reflux. The acrylate monomer mixture containing peroxide and thiol are added a dropwise over a period of 3 hours and the mixture heated above 110° Celsius with mechanical stirring. An additional 0.3 grams of benzoyl peroxide is added over a period of 15 minutes to the flask followed by a subsequent hour of temperature maintenance. Then an additional 0.1 gram of benzoyl peroxide is added over a period of 5 minutes and reaction temperature maintained for an additional hour. Thereafter, 30 additional grams of solvent is added and the reaction mixture cooled to 80° Celsius with nitrogen purge being initiated. An isocyanate (toluene diisocyanate) is added to provide a stoichiometric moiety equivalent of isocyanate groups for hydroxyl groups associated with hydroxyl ethyl acrylate plus thiol moieties present in the mixture plus the amount of moisture present in the mixture. According to the synthesis, 0.016 moles of hydroxyl and thiol groups are present. The moisture content of the mixture is readily determined through Karl Fischer titration. After combining the isocyanate with the mixture and mixing for an additional 10 minutes, an dioctyl tin carboxylate catalyst is added in an amount of 0.4 grams with continued mixing for an additional hour. The resulting isocyanate terminated prepolymer has a mean molecular weight of 100,000 grams per mole and a glass transition temperature of -35° Celsius. Upon exposure to ambient moisture, the resultant isocyanate terminated prepolymer moisture cures to a polyacrylic containing urethane linkages.

It is appreciated that the properties of the resultant moisture cured polyacrylic are controlled by adjusting mole fraction weighted glass transition temperature of the various monomers, the quantity of chain extender (dodecane thiol), the nature of functional monomers, and the functionality of a prepolymer. The prepolymer synthesized in this example is particularly well suited as a sealant having a linear elongation of between 500 and 1000 percent with good adhesion to glass and aluminum substrates.

Example 2 - Coating Type Medium Tg Polyacrylic Polymer Synthesis

The procedure of Example 1 is repeated with replacement of butyl acrylate and lauryl methacrylate with quantities of methyl methacrylate and methyl acrylate, respectively, to yield 13% methyl acrylate and 33% methyl methacrylate by molar fraction of acrylic monomer, with a monomer percent weighted prepolymer glass transition temperature of 25° Celsius. The resultant prepolymer had a mean molecular weight of 36,000 and a mean functionality of 3.

Upon moisture cure, the polyacrylic had a tensile strength of $2.57 \times 10^4$ N/m (147 pounds per linear inch) and a linear percent elongation of 565% as measured by standard methods AAMA 1.1.3.3 805.2-92, AAMA 1.1.3.3 805.9-92, and ASTM D-412. The resultant polyacrylic is comparatively hard relative to that produced in Example 1 yet remains pourable. The high tensile and cohesive strengths of the resulting polyacrylic polymer formed from this prepolymer come at the expense relative to Example 1 polyacrylic of lacking adhesion to glass aluminum substrates.

Example 3 - High Glass Transition Temperature Inventive Polyacrylate

The process of Example 1 is repeated with methacrylate accounting for 11 molar percent of the acrylate monomers present and 73 molar percent of the acrylic monomers present being methyl methacrylate with the remaining acrylate polymers decreased proportionally. The weighted monomer percent glass transition temperature of the resulting prepolymer is 50° Celsius. Upon moisture cure of the isocyanate groups to form a cross-linked polymer, a comparative low tack polymer with considerably higher toughness and hardness is prepared relative to the polymer produced according to Example 2.

Example 4 - Polymer Synthesis with Epoxidized Functional Acrylate

The procedure of Example 1 is repeated with 96 mole percent of the acrylate monomer being methyl methacrylate and 3 percent of the acrylate monomer being glycidyl acrylate. After mixture cooling to 80° Celsius and the initiation of nitrogen purge, the resulting polymer incorporating epoxy groups is then diluted with an additional 30 grams terbutyl acetate, 3 grams distilled water and a stoichiometric excess of ethylamine relative to epoxy moieties present. The mixture is autoclaved at 90° Celsius for 48 hours to induce epoxide ring amination. The resulting adjacent hydroxyl and amine groups formed across the reactant epoxide are then reacted at 70° Celsius under nitrogen with isocyanate per Example 1 to convert at least half of the hydroxyl and/or amine groups present to isocyanate groups as per Example 1. The resultant polymer has a glass transition temperature, tack, and adhesion that are each within 15 percent above that obtained for the polyacrylic of Example 1.

Example 5 - Amine Functionalized Prepolymer (not example of the invention)

The process of Example 1 is repeated with the substitution of an equivalent molar amount of 2-terbutyl amino ethyl methacrylate for hydroxy ethylacrylate. After cooling to 80° Celsius and initiating nitrogen purge, the resultant prepolymer and resulting amine functionalized prepolymer is reacted with phosgene in a sealed reaction vessel and further reacted to convert the majority of amine functionality in the prepolymer to isocyanate functionality with concurrent volatilization and neutralization of the evolved HCl. Upon moisture cure, the resulting polyacrylic has properties similar to those of the polymers of the preceding examples.

Patent documents and publications mentioned in the specification are indicative of the levels of those skilled in the art to which the invention pertains.

**Claims**

1. A polyacrylic polymer comprising:

   a plurality of acrylic prepolymer segments having an average molecular weight of between 3,000 and 600,000 grams per mole, said plurality of acrylic prepolymer segments each being a copolymer of a monomer selected from the group consisting of: $C_1$-$C_{16}$ alkyl acrylate, and $C_1$-$C_{16}$ alkyl methacrylate as the predominant monomeric group and a functionalized acrylic monomer having a functional group being selected from a hydroxyl, and an epoxy; said plurality of acrylic polymer segments interconnected by reacting said prepolymer with a polyisocyanate selected from toluene diisocyanate, naphthalene diisocyanate, hexamethylene diisocyanate and methylene diphenyl diisocyanate, whereby a first isocyanate moiety of said polyisocyanate reacts with said functional moiety and a second isocyanate undergoes moisture cure with moisture cure induced linkages of urethane.

2. The polymer of claim 1, wherein said moisture cure induced linkages are formed in a volatile organic component exempt mixture.

3. The polymer of claim 1, further comprising a moisture content of between 0.005 and 0.1 total weight percent.

4. The polymer of claim 1, wherein said plurality of acrylate prepolymer segments are each connected on an average to between three and four inclusive other of said plurality of acrylic prepolymer segments.

5. The polymer of claim 1, wherein said plurality of acrylate prepolymer segments are each connected on an average to between two and three inclusive other of said plurality of acrylic prepolymer segments.

6. A process for moisture curing acrylic prepolymer to form a polyacrylic polymer comprising:

   forming a plurality of acrylic prepolymer segments having an average molecular weight of between 3,000 and 600,000 grams per mole, said plurality of acrylic polymer segments each being a copolymer formed from at least one nonreactive monomer selected from the group consisting of: $C_1$-$C_{16}$ alkyl acrylate, and $C_1$-$C_{16}$ alkyl methacrylate; and a functionalized acrylic monomer having a functional group being selected from a hydroxyl, and an epoxy; reacting the plurality of functional moieties present in each of said plurality of acrylic prepolymer segments with polyisocyanate selected from toluene diisocyanate, naphthalene diisocyanate, hexamethylene diisocyanate and methylene diphenyl diisocyanate, whereby a first isocyanate moiety reacts with said functional group to yield isocyanate functionalized acrylic prepolymer segments; storing said isocyanate functionalized acrylic prepolymer segments in an anhydrous state; applying said isocyanate functionalized acrylic prepolymer segments to a substrate; and allowing sufficient time for moisture cure of said isocyanate functionalized acrylic prepolymer segments to induce cure to form the polyacrylic polymer.

7. The process of claim 6, wherein said substrate is glass.

8. The process of claim 6, wherein said substrate is selected from the group consisting of aluminum, polyvinyl chloride, and steel.

9. The process of claim 6, wherein said reagent is a diisocyanate present in an amount such that a first isocyanate moiety of said diisocyanate reacts with said functional moiety and a second isocyanate undergoes moisture cure.

10. The process of claim 9, wherein said functional moiety is hydroxyl.

**Patentansprüche**

1. Polyacrylpolymer, umfassend:

mehrere Acrylprepolymer-Segmente mit einem mittleren Molekulargewicht zwischen 3000 und 600.000 Gramm pro Mol, wobei es sich bei den mehreren Acrylprepolymer-Segmenten jeweils um ein Copolymer eines Monomers aus der Gruppe bestehend aus $C_1$-$C_{16}$-Alkylacrylat und $C_1$-$C_{16}$-Alkylmethacrylat als überwiegender Monomergruppe und eines funktionalisierten Acrylmonomers mit einer aus einem Hydroxyl und
einem Epoxy ausgewählten funktionellen Gruppe handelt;
wobei die mehreren Acrylpolymer-Segmente durch Reaktion des Prepolymers mit einem aus Toluoldiisocyanat, Naphthalindiisocyanat, Hexamethylendiisocyanat und Methylendiphenyldiisocyanat ausgewählten Polyisocyanat, wobei eine erste Isocyanatgruppierung des Polyisocyanats mit der funktionellen Gruppierung reagiert und ein zweites Isocyanat Feuchtigkeitshärtung durchläuft, mit durch Feuchtigkeitshärtung induzierten Urethanverknüpfungen miteinander verbunden sind.

2. Polymer nach Anspruch 1, wobei die durch Feuchtigkeitshärtung induzierten Verknüpfungen in einer von leichtflüchtigen organischen Komponenten freien Mischung gebildet werden.

3. Polymer nach Anspruch 1, ferner mit einem Feuchtigkeitsgehalt zwischen 0,005 und 0,1 Gesamtgewichtsprozent.

4. Polymer nach Anspruch 1, wobei die mehreren Acrylatprepolymer-Segmente jeweils mit durchschnittlich zwischen drei und vier inklusive anderen der mehreren Acrylprepolymer-Segmente verbunden sind.

5. Polymer nach Anspruch 1, wobei die mehreren Acrylatprepolymer-Segmente jeweils mit durchschnittlich zwischen zwei und drei inklusive anderen der mehreren Acrylprepolymer-Segmente verbunden sind.

6. Verfahren zum Feuchtigkeitshärten von Acrylprepolymer zu einem Polyacrylpolymer, bei dem man:

mehrere Acrylprepolymer-Segmente mit einem mittleren Molekulargewicht zwischen 3000 und 600.000 Gramm pro Mol bildet, wobei es sich bei den mehreren Acrylpolymer-Segmenten jeweils um ein Copolymer aus mindestens einem nichtreaktiven Monomer aus der Gruppe bestehend aus $C_1$-$C_{16}$-Alkylacrylat und $C_1$-$C_{16}$-Alkylmethacrylat und einem funktionalisierten Acrylmonomer mit einer aus einem Hydroxyl und einem Epoxy ausgewählten funktionellen Gruppe handelt;
die mehreren funktionellen Gruppierungen, die in jedem der Acrylprepolymer-Segmente vorliegen, mit einem aus Toluoldiisocyanat, Naphthalindiisocyanat, Hexamethylendiisocyanat und Methylendiphenyldiisocyanat ausgewählten Polyisocyanat umsetzt, wobei eine erste Isocyanatgruppierung mit der funktionellen Gruppe zu isocyanatfunktionalisierten Acrylprepolymer-Segmenten reagiert;
die isocyanatfunktionalisierten Acrylprepolymer-Segmente in wasserfreiem Zustand lagert;
die isocyanatfunktionalisierten Acrylprepolymer-Segmente auf ein Substrat aufbringt und genug Zeit zur Feuchtigkeitshärtung der isocyanatfunktionalisierten Acrylprepolymer-Segmente zur Induzierung von Härtung zur Bildung des Polyacrylpolymers lässt.

7. Verfahren nach Anspruch 6, bei dem es sich bei dem Substrat um Glas handelt.

8. Verfahren nach Anspruch 6, bei dem man das Substrat aus der Gruppe bestehend aus Aluminium, Polyvinylchlorid und Stahl auswählt.

9. Verfahren nach Anspruch 6, bei dem es sich beim Reagens um ein Diisocyanat handelt, das in einer solchen Menge vorliegt, dass eine erste Isocyanatgruppierung des Diisocyanats mit der funktionellen Gruppierung reagiert und ein zweites Isocyanat Feuchtigkeitshärtung durchläuft.

10. Verfahren nach Anspruch 9, bei dem es sich bei der funktionellen Gruppierung um Hydroxyl handelt.

**Revendications**

1. Polymère polyacrylique comprenant :

   une pluralité de segments de prépolymère acrylique ayant un poids moléculaire moyen compris entre 3 000 et 600 000 grammes par mole, ladite pluralité de segments de prépolymère acrylique étant chacun un copolymère d'un monomère choisi dans le groupe constitué de : acrylate d'alkyle en $C_1$-$C_{16}$, et méthacrylate d'alkyle en $C_1$-$C_{16}$ en tant que groupe monomère prédominant et un monomère acrylique fonctionnalisé ayant un groupe fonctionnel étant choisi parmi un hydroxyle, et un époxy ;
   ladite pluralité de segments de polymère acrylique interconnectés par réaction dudit prépolymère avec un polyisocyanate choisi parmi le diisocyanate de toluène, le diisocyanate de naphtalène, le diisocyanate d'hexaméthylène et le diisocyanate de méthylènediphényle, de telle manière qu'un premier fragment isocyanate dudit polyisocyanate réagisse avec ledit fragment fonctionnel et un deuxième isocyanate subit un durcissement à l'humidité avec des groupes de liaison induits par durcissement à l'humidité d'uréthane.

2. Polymère de la revendication 1, lesdits groupes de liaison induits par durcissement à l'humidité étant formés dans un mélange exempt de composant organique volatil.

3. Polymère de la revendication 1, comprenant en outre une teneur en humidité comprise entre 0,005 et 0,1 pour cent en poids total.

4. Polymère de la revendication 1, ladite pluralité de segments de prépolymère d'acrylate étant chacun connectés en moyenne à un nombre compris entre trois et quatre inclus d'autres de ladite pluralité de segments de prépolymère acrylique.

5. Polymère de la revendication 1, ladite pluralité de segments de prépolymère d'acrylate étant chacun connectés en moyenne à un nombre compris entre deux et trois inclus d'autres de ladite pluralité de segments de prépolymère acrylique.

6. Procédé de durcissement à l'humidité de prépolymère acrylique pour former un polymère polyacrylique comprenant :

   la formation d'une pluralité de segments de prépolymère acrylique ayant un poids moléculaire moyen compris entre 3 000 et 600 000 grammes par mole, ladite pluralité de segments de prépolymère acrylique étant chacun un copolymère formé d'au moins un monomère non réactif choisi dans le groupe constitué de : acrylate d'alkyle en $C_1$-$C_{16}$, et méthacrylate d'alkyle en $C_1$-$C_{16}$ ; et un monomère acrylique fonctionnalisé ayant un groupe fonctionnel étant choisi parmi un hydroxyle, et un époxy ;
   la réaction de la pluralité de fragments fonctionnels présents dans chacun de ladite pluralité de segments de prépolymère acrylique avec un polyisocyanate choisi parmi le diisocyanate de toluène, le diisocyanate de naphtalène, le diisocyanate d'hexaméthylène et le diisocyanate de méthylènediphényle, de telle manière qu'un premier fragment isocyanate réagisse avec ledit groupe fonctionnel pour obtenir des segments de prépolymère acrylique fonctionnalisé par isocyanate ;
   le stockage desdits segments de prépolymère acrylique fonctionnalisé par isocyanate dans un état anhydre ;
   l'application desdits segments de prépolymère acrylique fonctionnalisé par isocyanate sur un substrat ; et
   l'attente d'un temps suffisant pour le durcissement à l'humidité desdits segments de prépolymère acrylique fonctionnalisé par isocyanate pour induire un durcissement pour former le polymère polyacrylique.

7. Procédé de la revendication 6, ledit substrat étant du verre.

8. Procédé de la revendication 6, ledit substrat étant choisi dans le groupe constitué de l'aluminium, le poly(chlorure de vinyle), et l'acier.

9. Procédé de la revendication 6, ledit réactif étant un diisocyanate présent en une quantité telle qu'un premier fragment isocyanate dudit diisocyanate réagisse avec ledit fragment fonctionnel et qu'un deuxième isocyanate subisse un durcissement à l'humidité.

10. Procédé de la revendication 9, ledit fragment fonctionnel étant hydroxyle.

**REFERENCES CITED IN THE DESCRIPTION**

**Patent documents cited in the description**

- EP 0205846 A
- US 2949445 A